**Europäisches Patentamt**

**European Patent Office**

**Office européen des brevets**

(19)

(11) **EP 1 288 790 A1**

(12) **EUROPEAN PATENT APPLICATION**

(43) Date of publication:
**05.03.2003 Bulletin 2003/10**

(51) Int Cl.⁷: $G06F\ 17/27$, $G06F\ 17/30$

(21) Application number: **01203239.7**

(22) Date of filing: **29.08.2001**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI**<br><br>(71) Applicant: **Tarchon BV**<br>**1813 KV Alkmaar (NL)**<br><br>(72) Inventors:<br>• **Veling, Willem Anne**<br>**1628 XC Hoorn (NL)** | • **Van der Weide, Daniel Barak**<br>**1422 KR Uithoorn (NL)**<br><br>(74) Representative:<br>**de Vries, Johannes Hendrik Fokke**<br>**De Vries & Metman**<br>**Overschiestraat 180**<br>**1062 XK Amsterdam (NL)** |

(54) **Method of analysing a text corpus and information analysis system**

(57)    An information analysis system (2) for retrieving related character sequences is programmed to select combinations of a first character sequence and a second character sequence, occurring in a text corpus (5) and differing in composition by an amount smaller than a threshold distance value. The system comprises a database (7) comprising a list (8) of character sequences in the text corpus and counts (9) of the number of occurrences of each sequence in the corpus (5), and a database (10; 28) comprising a list of combinations of character sequences in the corpus and sequence distance values, providing a measure of difference in composition between character sequences in a combination. The system (2) is programmed to compute a value indicative of the difference in number of occurrences between the first character sequence and the second character sequence and return the combination as output if the occurrence difference value is larger than a threshold value.

Fig. 2

Printed by Jouve, 75001 PARIS (FR)

EP 1 288 790 A1

**Description**

The invention relates to a method of analysing a corpus comprising one or more documents, by searching for related character sequences, comprising selecting a first character sequence in the corpus, selecting one or more further character sequences in the corpus, and retrieving a sequence distance value for each combination of first and further character sequence, providing a measure of difference in composition between the character sequences of the combination.

The invention further relates to an information analysis system for retrieving related character sequences, programmed to select combinations of a first character sequence and a second character sequence, occurring in a text corpus and differing in composition by an amount smaller than a threshold distance value.

The invention also relates to the use of the above-mentioned method to search a corpus of text for mis-spelled character sequences.

Examples of known variants of the above-mentioned method and system allow users to search files for occurrences of a character sequence and variants with related spelling by entering the character sequence and conceivable variants with similar spelling. The user has to enter a search expression for which to search the text file. The addition of so-called wild characters, which can have any possible value, relieves him from the need to enter a comprehensive list of search expressions. However, the user still has to make a judicious choice of search expression, particularly of the number and placement of wild characters. The search expression must bear sufficient resemblance to the correctly spelled character sequence, and still allow for all possible related spellings. Only after the search expression has been entered, are the files searched for occurrences of the search expression. Where a large corpus of text, consisting of many files or very large files, has to be searched, this can take quite a while.

It is an object of the present invention to provide a method and system of the kind mentioned above that provide automatic and efficient identification of a character sequence and related variants of the sequence.

Accordingly, in the method according to the invention, values are retrieved indicating the number of occurrences of the first and each further character sequence in the corpus, a value indicative of the difference in number of occurrences of the character sequences of a combination is calculated for each combination, a link is made between the character sequences of a combination if the sequence distance is smaller than a threshold distance, and the link is presented as output if the occurrence difference is larger than a threshold. Thus, because the correct sequence will occur much more often than the variants, and variants are distinguished by differing less from the search term than completely unrelated sequences, a method is provided to automatically identify the related variants.

The information analysis system according to the invention comprises a database comprising a list of character sequences in the text corpus and counts of the number of occurrences of each sequence in the corpus; and a database comprising a list of combinations of character sequences in the corpus and sequence distance values, providing a measure of difference in composition between character sequences in a combination, wherein the system is programmed to compute a value indicative of the difference in number of occurrences between the first character sequence and the second character sequence and return the combination as output if the occurrence difference value is larger than a threshold value.

Thus, because use is made of databases, faster identification of combinations is made possible, since the corpus itself does not have to be searched. Only information comprised in the databases need be processed, resulting in more efficient processing of an analysis run.

In the preferred embodiment, the database comprising the list of combinations comprises only combinations of first and second character sequences having a sequence distance smaller than the threshold distance value. Thus, part of the processing has been done beforehand. Only a subset of possibly related combinations of character sequences is processed, resulting in an even shorter processing time.

In an advantageous embodiment, the system further comprises a database for storing the output, wherein the system is programmed to accept a search expression as input and to consult the database for retrieving character sequences related to the search expression.

This means that all the processing necessary to identify sets of related character sequences has been done before a search of sequences related to a specific sequence is started. The carrying out of a search relating to this specific sequence becomes a mere matter of retrieving the relevant records from the output database.

The invention will now be explained in further detail with reference to the drawings, of which

Fig. 1 shows an example of a hardware configuration to implement the system according to the invention,
Fig. 2 shows a very schematic diagram representing data structures comprised in an embodiment of the system according to the invention,
Fig. 3 shows a flow chart of a phase in the information analysis process, and
Fig. 4 shows a flow chart of a phase in the information analysis process subsequent to that of Fig. 3.

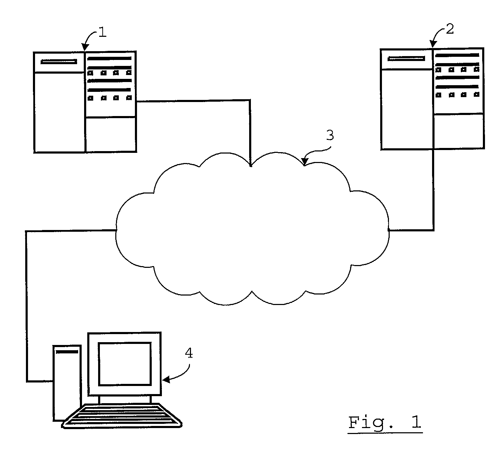

In Fig. 1 there is shown a first server 1, storing a text corpus. The text corpus can be a number of files or a single file. The files can be in any format. In a simple form, they can be ASCII-files, but binary files encoding text are equally possible. In addition, it is not necessary that the text be meaningful to a human reader. For example the characters can be part of a code, encoding, for example, DNA base pairs or a phonetic representation of speech. It is sufficient that the files contain characters, and that words or character sequences can be distinguished within the text corpus.

The first server 1 is part of a networked configuration. A second server 2 is linked to the first server 1 through a network 3. A terminal 4 is also connected to the network 3. As part of the present invention, the corpus stored on the first server 1 is analysed by searching for related character sequences inside the corpus. The results of this analysis can then, for instance, be stored on the second server 2, in a manner that will be explained in more detail below.

When a user of the terminal 4 wishes to search the corpus for an expression, and wishes to also find all related expressions, he can enter a query on the terminal 4. In the preferred embodiment, the query is handled entirely on the second server 2, without requiring any further searching of the corpus on server 1. Only if the files containing the expression and related variants should also be retrieved, is the first server 1 again required.

It is noted that the configuration of Fig. 1 is provided merely by way of example, to emphasise the important feature of being able to separate the process of searching the corpus from the process of handling the query. Other configurations, wherein the corpus is stored on a single computer on which both the search and the query is processed, for example, are equally possible within the scope of the invention. The corpus need not be stored in its entirety on the first server 1 either. For example, the corpus can comprise a number of web pages on the Internet, or be otherwise distributed over various servers connected to a network.

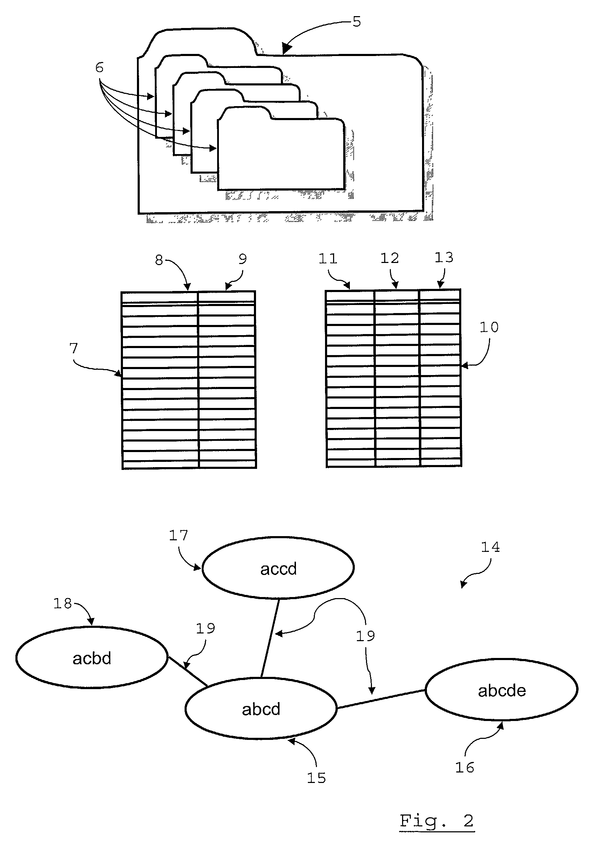

Turning now to Fig. 2, there is shown a very schematic representation of the basic data structures used as part of the invention. These are conceptual representations of data. The exact format in which the data is stored can vary between different implementations of the invention.

A text corpus 5 comprises a number of documents 6. The contents of these files comprise text consisting of words, or character sequences.

A first database 7 comprises a column 8 of words and a column 9 with counts of the number of times each word occurs in the corpus 5. The database 7 can be updated whenever the composition of the corpus 5 changes, by analysing added documents 6. It is also possible to carry out a word count of the entire corpus 5 at regular time intervals.

A second database 10 is used as part of the invention. This database 10 comprises a column 11 of first words, and a column 12 of further words. The database is assembled in such a way that each combination of words or character sequences occurs only once. In a third column 13 a calculated sequence distance is stored as a numerical value. For each row in the database 10, this value provides a measure of the difference in composition between the word in the first column 11 and that in the second column 12 of that row. To keep the size of the second database 10 within bounds, it comprises only combinations of first and second character sequences having a sequence distance smaller than a threshold distance value. In other words, only combinations of first and second character sequences with a similar composition are stored.

Fig. 2 further shows a semantic network 14, which is generated in one embodiment of the invention as output of the search process. It comprises nodes 15-18, which represent character sequences. It further comprises links 19 between nodes representing related character sequences. It is noted that the semantic network 14 can also be replaced by a different data representation within the scope of the invention. Indeed, a simple listing of results, for example in alphabetical order, is conceivable. However, the semantic network 14 has the advantage of directly linking related sequences, facilitating retrieval of combinations and other-further processing of the analysis results.

The system calculates a value indicative of the difference in number of occurrences between a first character sequence and a second character sequence in a row of the database 10. The combination of the two is returned as output if the occurrence difference value calculated is larger than a threshold value. In other words, if one of the sequences occurs much more often than the other sequence, then the combination of sequences is returned as output. The combination can then be stored as two nodes with a link between them in the semantic network 14.

Fig. 2 shows a simple example of the result of an analysis. A central node 15 represents the character sequence 'abcd'. Another node 16 represents the character sequence 'abcde', which differs only from the first sequence by having one added character. Another node 17 represents the character sequence 'accd', which differs in that the character 'b' has been substituted by 'c'. Another node 18 represents character sequence 'acbd' that differs in that characters 'b' and 'c' are in a different order. One transposition operation would be needed to change character sequence 'acbd' into character sequence 'abcd'. In all the described cases, the character sequence represented by the central node 15 can be transformed into that represented by one of the other nodes 16-18 through a series of operations on single characters, either insertion, deletion or replacement of a character.

The smallest number of these operations that would be needed for the transformation, is used to compute the difference in composition of the sequences as a numerical value. Optionally the different kinds of operations can be weighted. In this case the transformation with the lowest total cost would be calculated and this total cost would be used as a numerical value. A more detailed description of a specific algorithm that can be used will be given below.

To arrive at the semantic network 14 starting from the corpus 5 of documents 6, three phases must be gone through. First, the first database 7, comprising the character sequences and counts of the number of occurrences of these character sequences in the corpus 5 must be assembled. Then the database 10 of character sequence combinations and composition distances must be compiled. In the third phase, the analysis output must be created. This can then be stored in the semantic network 14 or provided as the input of a pipe to a next process.

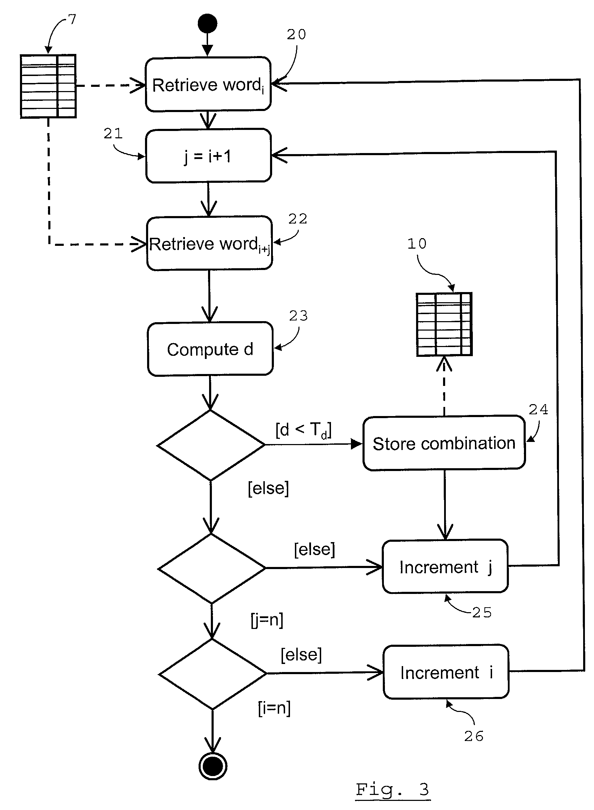

Fig. 3 shows a flow chart of the second of the above-mentioned phases in a preferred embodiment of the invention. It starts with the database 7 of character sequences and counts of the number of occurrences of each of these character sequences in the corpus to be analysed.

A first character sequence is retrieved. In a subsequent step 22, a second character sequence is retrieved from the database 7. Next, a sequence distance value is calculated. The step 23, which this is done, can, for example, make use of the Levenshtein distance algorithm.

The Levenshtein distance algorithm for computing the distance between a character sequence A= $a_1a_2a_3...a_n$ and a character sequence B = $b_1b_2...b_m$ can be implemented in the following variant. Let $A_i$= $a_1a_2...a_i$, and Bj = $b_1b_2...b_j$. $D(i,j)$ is the number of single character substitutions, insertions and deletions necessary to convert $A_i$ into $B_j$. Evidently, $D(i,0) = i$, and $D(0,j) = j$, then

$$D(i,j) = \min\{1-\delta(a_i,b_j)+D(i-1,j-1),D(i-1,j)+1,D(i,j-1)+1\},$$

wherein $\delta(a_i,b_j) = 1$, if $a_i = b_j$. $D(n,m)$, is the Levenshtein distance between sequence A and B.

The above-mentioned algorithm can be modified in a number of ways within the scope of the invention, or even replaced by a different algorithm, which also assigns a numerical value to the sequence composition distance. Examples of other distance definitions include the Hamming distance, the Episode distance and the Longest Common Subsequence distance. One modification to the Levenshtein algorithm, is to provide a different weight to each of the elementary operations substitution, addition, or deletion. Another modified algorithm can take account of transpositions as an extra elementary operation, i.e. changing the order of character $b_{i-1}$ and $b_i$ to convert $B_j$ into $A_i$.

Subsequent to the step 23 of computing the sequence distance, this distance is compared to a threshold value, $T_d$. If it is smaller than $T_d$, indicating that the first and second character sequence are very similar in composition, then the combination of character sequences and the associated composition distance is added to the database 10 of word combinations.

In the preferred embodiment of the invention, combinations with a distance larger than $T_d$ are not stored, keeping the size of the database 10 small and facilitating a later search through the results. Then, in a next step, a further second character sequence is retrieved from the database 7 with occurrence counts, and the whole process is repeated again for the combination of the first character sequence and this further character sequence.

After all combinations with the first character sequence have been analysed, a next character sequence is chosen as the first character sequence and the process cycles through steps 20-24, and 25 again. No combination of the same two character sequences is assessed twice, though, so there are no double entries in the database 10 of combinations.

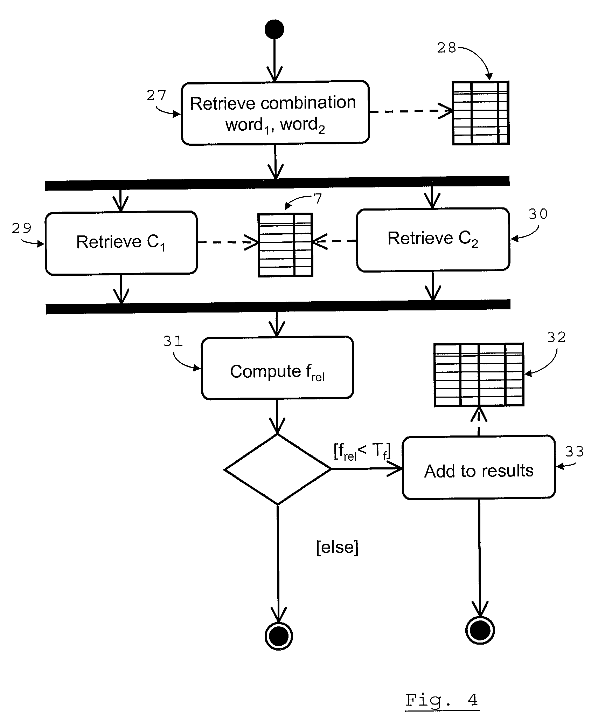

Fig. 4 shows the third phase that occurs after the phase of Fig. 3. In a first step 27, a combination of character sequences is retrieved from a database 28 of combinations of character sequences. This is preferably the database 10 of Fig. 3, since that database 10 contains only combinations having a composition distance smaller than the threshold $T_d$. Otherwise, step 27 would further comprise computing the composition distance and discarding combinations with too large a distance value, in the manner explained above.

In two subsequent steps 29, 30, counts of the number of occurrences of the character sequences forming the combination are retrieved from the database 7 generated in the first phase of analysing the corpus.

Let the occurrence counts of the first and second character sequence be denoted as $C_1$, $C_2$, respectively. A next step 31 then consists of calculating a value indicative of the difference in number of occurrences. In the present embodiment, this is the relative occurrence frequency, $f_{rel}$:

$$f_{rel} = \frac{\min(C_1,C_2)}{\max(C_1,C_2)} .$$

The smaller the relative occurrence frequency, the larger the occurrence difference value is. Large occurrence difference values, or low values of $f_{rel}$, indicate that one of the character sequences occurs much more often in the corpus being analysed than the other character sequence.

It will be obvious to those skilled in the art that a number of other numerical measures of the relative occurrence frequency can be used within the scope of the invention. For example, a normalised difference between the two counts, $C_1$ and $C_2$, could be used:

$$\Delta_c = \left| \frac{C_1 - C_2}{\sum_i C_i} \right| .$$

The link between the two character sequences of the combination is presented as output and added to a database 32 or results file in a last step 33, only if the occurrence difference value is larger than a threshold value. In other words, only if $f_{rel} < T_f$, is the combination taken up in database 32.

The method according to the invention, and the database 32 resulting from it, can serve many useful purposes. For example, the invention can form an invaluable aid in a document retrieval system, where documents must be identified that contain a certain word. It is nearly always the case that documents containing misspellings of this word should also be identified and retrieved. Using the database 32, related spellings occurring within the corpus of documents can automatically be taken up in the search, without any user involvement. The person carrying out the search does not have to think of possible misspellings himself.

A different use would be to search for trademarks that are very similar to a registered trademark, and could consequently cause confusion. Another use would be in a voice recognition system, where a phonetic transcript of speech is made. An unresolved word with a very similar phonetic representation to a known word can be linked to the known word with a high degree of certainty.

It will be apparent to those skilled in the art that the invention is not limited to the above-described embodiments, which can be varied in a number of ways within the scope of the claims. In particular, data generated in intermediate phases of the analysis method can be stored in different formats. The output of the analysis can be piped to another process on the computer, stored in a database, in an output file, or presented on a screen.

**Claims**

1. Method of analysing a corpus (5) comprising one or more documents (6), by searching for related character sequences, comprising selecting a first character sequence in the corpus, selecting one or more further character sequences in the corpus, and retrieving a sequence distance value for each combination of first and further character sequence, providing a measure of difference in composition between the character sequences of the combination, wherein values are retrieved indicating the number of occurrences of the first and each further character sequence in the corpus, a value indicative of the difference in number of occurrences of the character sequences of a combination is calculated for each combination, a link (19) is made between the character sequences of a combination if the sequence distance is smaller than a threshold distance, and the link is presented as output if the occurrence difference is larger than a threshold.

2. Method according to claim 1, wherein a plurality of character sequences are selected from the corpus as first character sequences, and an output file is generated of all the links made for each of them.

3. Method according to any one of the preceding claims, wherein the sequence distance is calculated using the Levenshtein distance algorithm, prior to retrieval.

4. Use of a method according to any one of the preceding claims to search a corpus (5) of text for mis-spelled variants of a word.

5. Information analysis system (2) for retrieving related character sequences,
   programmed to select combinations of a first character sequence and a second character sequence, occurring in a text corpus (5) and differing in composition by an amount smaller than a threshold distance value, wherein the system comprises
   a database (7) comprising a list (8) of character sequences in the text corpus and counts (9) of the number of occurrences of each sequence in the corpus (5); and
   a database (10; 28) comprising a list of combinations of character sequences in the corpus and sequence distance values, providing a measure of difference in composition between character sequences in a combination, wherein the system (2) is programmed to compute a value indicative of the difference in number of occurrences between the first character sequence and the second character sequence and return the combination as output if the occurrence difference value is larger than a threshold value.

6.  Information analysis system according to claim 5, wherein the database (10; 28) comprising the list of combinations comprises only combinations of first and second character sequences having a sequence distance smaller than the threshold distance value.

7.  Information analysis system according to claim 5 or 6, wherein the sequence distance value is a value calculated according to the Levenshtein distance algorithm.

8.  Information analysis system according to any one of claims 5-7, further comprising a database (14; 32) for storing the output, wherein the system is programmed to accept a search expression as input, and to consult the database (14; 32) for retrieving character sequences related to the search expression.

9.  Information analysis system according to claim 8, wherein the database (14; 32) stores the output as a semantic network (14), comprising nodes (15-18) representing character strings and links (19) between nodes (15-18) representing combinations of related character strings.

10. Computer program code, suitable for loading onto a computer (2), such that the computer (2), when programmed in this way, is capable of, or adapted to carrying out a method according to any one of claims 1-3.

11. Computer program code, suitable for loading onto a computer (2), such that the computer (2), when programmed in this way, is capable of, or adapted to function as a system according to any one of claims 5-9

12. Computer program product, comprising a computer readable medium, having thereon computer program code means, when said programs is loaded, to make the computer execute a method according to any one of claims 1-3, and/or provide the function .

13. Computer program product, comprising a computer readable medium, having thereon computer program code means, when said programs is loaded, to allow the computer to function as a system according to any one of claims 5-9.

Fig. 1

Fig. 2

Fig. 3

27 Retrieve combination
word$_1$, word$_2$

28

29 Retrieve C$_1$

7

30 Retrieve C$_2$

31 Compute f$_{rel}$

32

[f$_{rel}$< T$_f$]

33 Add to results

[else]

Fig. 4

**European Patent Office**

## EUROPEAN SEARCH REPORT

Application Number

EP 01 20 3239

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X<br><br>Y | EP 0 415 000 A (IBM)<br>6 March 1991 (1991-03-06)<br>* abstract; figure 1 *<br>* page 2, line 24 - page 3, line 18 * | 1,2,4-6,<br>8,10-13<br>3,7 | G06F17/27<br>G06F17/30 |
| Y | OKUDA T ET AL: "METHOD FOR THE CORRECTION OF GARBLED WORDS BASED ON THE LEVENSTEIN METRIC"<br>IEEE TRANSACTIONS ON COMPUTERS, IEEE INC. NEW YORK, US,<br>vol. C-25, no. 2, 1976, pages 172-178,<br>XP000916729<br>ISSN: 0018-9340<br>* page 172, left-hand column, line 1 - page 173, left-hand column, line 6 * | 3,7 | |
| A | "TREATING LOW FREQUENCY DICTIONARY WORDS AS MISSPELLINGS TO INCREASECORRECTION ACCURACY"<br>IBM TECHNICAL DISCLOSURE BULLETIN, IBM CORP. NEW YORK, US,<br>vol. 31, no. 11,<br>1 April 1989 (1989-04-01), pages 430-431,<br>XP000098563<br>ISSN: 0018-8689<br>* the whole document * | 1,5 | TECHNICAL FIELDS SEARCHED (Int.Cl.7)<br><br>G06F |
| A | WO 00 57291 A (JUSTSYSTEM PITTSBURGH RESEARCH) 28 September 2000 (2000-09-28)<br>* abstract * | 1,5 | |

The present search report has been drawn up for all claims

| Place of search | Date of completion of the search | Examiner |
|---|---|---|
| BERLIN | 4 February 2002 | Deane, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 01 20 3239

This annex lists the patent family members relating to the patent documents cited in the above-mentioned European search report.
The members are as contained in the European Patent Office EDP file on
The European Patent Office is in no way liable for these particulars which are merely given for the purpose of information.

04-02-2002

| Patent document cited in search report | | Publication date | | Patent family member(s) | | Publication date |
|---|---|---|---|---|---|---|
| EP 0415000 | A | 06-03-1991 | US | 5258909 | A | 02-11-1993 |
| | | | DE | 69031099 | D1 | 04-09-1997 |
| | | | EP | 0415000 | A2 | 06-03-1991 |
| | | | JP | 1977910 | C | 17-10-1995 |
| | | | JP | 3098158 | A | 23-04-1991 |
| | | | JP | 7009655 | B | 01-02-1995 |
| WO 0057291 | A | 28-09-2000 | AU | 2492200 | A | 09-10-2000 |
| | | | WO | 0057291 | A1 | 28-09-2000 |

EPO FORM P0459

For more details about this annex : see Official Journal of the European Patent Office, No. 12/82